# EUROPÄISCHE PATENTANMELDUNG

(11) **EP 2 050 997 A1**
(43) Veröffentlichungstag der Anmeldung: **22.04.2009**
(21) Anmeldenummer: 08105109.6
(22) Anmeldetag: 25.08.2008
(51) Int. Cl.: F16P 3/14

(54) **Sicherheits-Lichtgitter**

(30) Priorität: 19.09.2007 DE 102007044680
(71) Anmelder: SICK AG, 79183 Waldkirch (DE)
(72) Erfinder: Klingelhöfer, Dr. Christian, 79110, Freiburg (DE)
(74) Vertreter: Ludewigt, Christoph

(57) **Zusammenfassung**

Konfigurationsvorrichtung, insbesondere für Lichtgitter (10) oder Sicherheitssteuerungen mit einer Steuer- und Auswerteeinheit (22,24), mit wenigstens einem Einstellelement (F1,F2) zum Einstellen von Funktionen (4), wobei Mittel zur Zuordnung (6) von wenigstens einer der einstellbaren Funktionen zu dem Einstellelement vorgesehen sind.
Sicherheits-Lichtgitter zur Überwachung eines Schutzfeldes (21) bestehend aus einer ersten Leiste (12), die eine Reihe nebeneinander angeordneter Lichtsender (14) und/oder Lichtempfänger (18) aufweist und einer zweiten Leiste (16), die den Lichtsendern (14) und/oder Lichtempfängern (18) entsprechende ebenfalls nebeneinander angeordnete Lichtempfänger (18) und/oder Lichtsender (16) aufweist, so dass eine Vielzahl zueinander paralleler und das Schutzfeld bildender Lichtschranken (20) gebildet sind. Weiter ist eine Steuer- und Auswerteeinheit (22,24) vorhanden, die die einzelnen Lichtschranken steuert und auswertet, so dass bei Unterbrechung einer oder mehrerer Lichtschranken durch ein Objekt, ein Warn- oder Steuersignal ableitbar ist. Es ist ein Einstellelement vorgesehen zum Einstellen von Funktionen des Lichtgitters, wobei Mittel zur Zuordnung von wenigstens einer der einstellbaren Funktionen zu dem Einstellelement vorhanden sind.

## Beschreibung

Die Erfindung betrifft eine Konfigurationsvorrichtung insbesondere für Lichtgitter oder Sicherheitssteuerungen zur Überwachung eines Schutzfeldes gemäß dem Oberbegriff des Anspruchs 1.

Derartige Lichtgitter für die Sicherheitstechnik dienen beispielsweise zur Absicherung von gefahrbringenden Maschinen, wie Gesenkbiegepressen, Stanzmaschinen, Schneidwerkzeugen, Schweißrobotern und dergleichen. Das Sicherheits-Lichtgitter schützt dabei vor unzulässigem Eindringen in Gefahrenbereiche, indem das durch das Lichtgitter aufgespannte Schutzfeld auf Verletzung durch ein Objekt überwacht wird. Wird das Schutzfeld verletzt, gibt das Sicherheits-Lichtgitter ein entsprechendes Signal aus, das z. B. ein Abschalten der gefahrbringenden Maschine auslösen kann.

Entsprechend der Anwendung muss das Lichtgitter vor einem Ersteinsatz oder auch nach einem Austausch konfiguriert werden. In einer solchen Konfiguration wird beispielsweise eingestellt,
- ob eine Schützkontrolle aktiv oder inaktiv sein soll,
- ob eine Wiederanlaufsperre aktiv oder inaktiv sein soll,
- ob eine hohe oder niedrige Reichweite eingestellt werden soll,
- welches Signal an einem Diagnoseausgang anliegen soll,
- welche einer vorgegebenen Auswahl von Muting-Zeiten eingestellt werden soll,
- ob eine Ausblendung von Teilen des Schutzfeldes aktiv oder inaktiv sein soll,
- ob eine Überbrückung der Schutzfunktion des Lichtgitters aktiv oder inaktiv sein soll,
- ob ein Taktbetrieb aktiv oder inaktiv sein soll,
- ob eine Sendeleistung zwischen verschiedenen Stufen umgeschaltet werden soll,
- ob eine reduzierte Auflösung aktiv oder inaktiv sein soll und/oder
- ob eine Zeitbegrenzung für eine Überbrückung aktiv oder inaktiv sein soll.

Es sind Lichtgitter bekannt, bei denen die Konfigurationsdaten mit Hilfe von Drahtbrücken am Lichtgitter selbst oder an einem zugehörigen Steuergerät eingestellt werden. Dies ist nicht nur zeitaufwändig und arbeitsintensiv, sondern es müssen im Gerät bestimmte Verfahren eingestellt sein, damit bei einem einfachen Fehler, wie Drahtbruch, die eingestellte Funktion sich nicht unbeabsichtigt ändert. Diese Konfigurationsart birgt daher ein Sicherheitsrisiko und ist nicht sehr komfortabel.

Weiter sind sogenannte DIP-Schalter zur Konfiguration bekannt, die aber den Nachteil haben, dass sie nur von einem Fachmann bedient werden können und bei einer Vielzahl einzustellender Funktionen eine unübersichtliche Einstellmöglichkeit darstellen.

Darüber hinaus sind Sicherheits-Lichtgitter bekannt, bei denen die Konfiguration über eine graphische Bedienoberfläche eingestellt werden kann. Dazu bedarf es einerseits eines Computers oder einer SPS und einer entsprechenden Schnittstelle am Lichtgitter zur Verbindung mit dem Computer oder der SPS. Dadurch ist zwar eine komfortable Eingabe gegeben, aber in nachteiliger Weise bedarf es dafür eines hohen Aufwandes. Es muss ein Zusatzgerät, wie ein PC und eine Gerätekommunikationsschnittstelle bereitgestellt werden.

Weiter ist es bekannt, Lichtgitter bereits bei der Herstellung mit einer bestimmten Konfiguration zu versehen. Das Lichtgitter ist somit fest für eine bestimmte Funktion eingestellt. Eine Veränderung der Konfiguration, beispielsweise über einen PC, ist aufwändig. Eine schnelle Änderung der Funktion direkt am Lichtgitter ist nicht möglich.

Aus der DE 203 17 976 U1 ist ein gattungsgemäßes Sicherheits-Lichtgitter bekannt zur Überwachung eines Schutzfeldes mit einer Lichtsendeleiste, die eine Reihe nebeneinander angeordneter Lichtsender aufweist und einer Lichtempfangsleiste, die den Lichtsendern entsprechende ebenfalls nebeneinander angeordnete Lichtempfänger aufweist. Durch das Lichtgitter ist eine Vielzahl zueinander paralleler und ein Schutzfeld bildender Lichtschranken gebildet. Weiter ist eine Steuer- und Auswerteeinheit vorhanden, welche die einzelnen Lichtschranken steuert und auswertet, so dass bei Unterbrechung einer oder mehrerer Lichtschranken durch ein Objekt ein Warnsignal ableitbar ist. Es sind Konfigurationsmittel vorhanden zum Konfigurieren des Lichtgitters, wobei die Konfigurationsmittel durch zwei Eingabeelemente und wenigstens ein Anzeigeelement gebildet sind.

Nachteilig dabei ist, dass alleine mit den zwei Tasten eine Vielzahl von Funktionen einzustellen ist. Für eine Eingabe von Konfigurationsdaten ist eines der Eingabeelemente zum Wählen einer Funktion und das andere zur Selektion eines gewünschten Funktionswertes ausgelegt. Die Eingabe der Konfigurationsdaten erfolgt nur über zwei Eingabeelemente, wodurch zwar keine zusätzlichen Geräte, wie ein PC oder zusätzliche Gerätekommunikationsschnittstellen oder dergleichen benötigt werden, jedoch eine umständliche und sehr aufwändige Konfigurationsabfolge notwendig ist, die voll zu Lasten des Kunden oder des Anwenders geht, denn dieser muss die Vielzahl der Funktionen konfigurieren.

Davon ausgehend liegt der Erfindung die Aufgabe zugrunde, eine Konfigurationsvorrichtung für Lichtgitter oder Sicherheitssteuerungen zu schaffen, die einfach und in kostengünstiger Weise einstellbar sind sowie ein Verfahren zur Einstellung von Funktionen bereitzustellen.

Der auf die Vorrichtung gerichtete Teil der Aufgabe wird gelöst durch eine Konfigurationsvorrichtung, insbesondere für Lichtgitter oder Sicherheitssteuerungen mit einer Steuer- und Auswerteeinheit, mit wenigstens einem Einstellelement zum Einstellen von Funktionen, wobei die Steuer- und Auswerteeinheit dazu ausgebildet ist, eine Zuordnung einer einstellbaren Funktion zu dem Einstellelement über eine Schnittstelle des Lichtgitters oder Sicherheitssteuerung vorzunehmen und ein Speicher vorgesehen ist, zum Speichern der Zuordnung, so dass die Zuordnung bis zu einer weiteren Veränderung erhalten bleibt.

Das Sicherheits-Lichtgitter zur Überwachung eines Schutzfeldes besteht aus einer ersten Leiste, die eine Reihe nebeneinander angeordneter Lichtsender und/oder Lichtempfänger aufweist und einer zweiten Leiste, die den Lichtsendern und/oder Lichtempfängern entsprechende ebenfalls nebeneinander angeordnete Lichtempfänger und/oder Lichtsender aufweist, so dass eine Vielzahl zueinander paralleler und das Schutzfeld bildender Lichtschranken gebildet sind. Weiter ist eine Steuer- und Auswerteeinheit vorhanden, die die einzelnen Lichtschranken steuert und auswertet, so dass bei Unterbrechung einer oder mehrerer Lichtschranken durch ein Objekt, ein Warn- oder Steuersignal ableitbar ist. Die Steuer- und Auswerteeinheit ist dazu ausgebildet, eine Zuordnung einer einstellbaren Funktion zu dem Einstellelement über eine Schnittstelle des Lichtgitters oder Sicherheitssteuerung vorzunehmen und ein Speicher ist vorgesehen, zum Speichern der Zuordnung, so dass die Zuordnung bis zu einer weiteren Veränderung erhalten bleibt.

Die Sicherheitssteuerung weist Eingänge zum Aufnehmen von Eingangssignalen, Ausgängen zum Erzeugen von sicheren Ausgangssignalen und wenigstens eine Steuer- und Auswerteeinheit zur Auswertung der Eingangsignale auf, wobei die Sicherheitssteuerung eine Konfigurationsvorrichtung aufweist.

Durch die Konfigurationsvorrichtung können bestimmte oder ausgesuchte Funktionen des Lichtgitters oder der Sicherheitssteuerung schnell aktiviert oder deaktiviert werden. Ein Lichtgitter enthält beispielsweise die einstellbaren Funktionen bzw. Eigenschaften
- Wiederanlaufsperre,
- Schützkontrolle,
- unterschiedliche Reichweiten,
- einen Diagnoseausgang für unterschiedliche Funktionen,
- Muting/Überbrückungszeiten,
- Ausblendung und Ausblendungsbereiche,
- Überbrückung des Lichtgitters,
- Zeitbegrenzungen für eine Überbrückung,
- Taktbetrieb,
- Sendeleistungsumschaltung und
- Auflösung.

Einige der Funktionen, wie beispielsweise Wiederanlaufsperre oder Taktbetrieb, können auch in der Sicherheitssteuerung vorgesehen sein. Mehrere Einstellelemente sind dabei unabhängig voneinander betätigbar vorgesehen. Die Einstellelemente sind dabei von außen zugänglich an dem Lichtgitter oder der Sicherheitssteuerung angebracht. Es ist vorgesehen, über die Zuordnungsmittel beispielsweise eine erste Funktion, die einstellbare Reichweite einem ersten Einstellelement zuzuordnen und eine zweite Funktion, die einstellbare Wiederanlaufsperre einem zweiten Einstellelement zuzuordnen. Diese Zuordnung bleibt dabei bis zu einer Änderung der Zuordnung zunächst dauerhaft erhalten. Die Zuordnung wird dabei in einem Speicher hinterlegt. Ausgehend von dieser Zuordnung ist es nun möglich, mit dem ersten Einstellelement direkt die Reichweite von einem ersten Bereich, beispielsweise einer niedrigen Reichweite, auf einen zweiten Bereich, eine hohe Reichweite umzuschalten. Hierzu wird das Einstellelement beispielsweise lediglich einmal betätigt, um die Funktion, also die Reichweite, umzuschalten bzw. zu verändern. Es kann auch vorgesehen sein, das selbe Einstellelement ein weiteres Mal zu betätigen, um die veränderte Funktion bzw. Reichweite für den Betrieb zu aktivieren. Weiter ist es mit dem zweiten Einstellelement möglich, die Funktion der Wiederanlaufsperre zu aktivieren oder zu deaktivieren. Dadurch ist es möglich, diese ausgewählten Funktionen direkt an dem Lichtgitter oder der Sicherheitssteuerung schnell und bequem einzustellen. Die übrigen Funktionen sind zunächst fest in dem Lichtgitter eingestellt und zunächst nicht über die Einstellelemente änderbar. Jedoch können diese weiteren Funktionen zur Anpassung des Lichtgitters für eine neue Anwendung in einem neuen Zuordnungsvorgang anstelle der bisherigen Funktionen dem ersten Einsstellelement bzw. dem zweiten Einsstellelement zugeordnet werden. Soll das Lichtgitter beispielsweise in einer anderen Anwendung zum Einsatz kommen, beispielsweise an einer Maschine, bei der Teile des Schutzfeldes zeitweise ausgeblendet werden sollen und ein Detektionsvermögen des Lichtgitters veränderlich sein soll, wird die Funktion der einstellbaren Ausblendung dem ersten Einstellelement zugeordnet und die Funktion der einstellbaren Auflösung dem zweiten Einstellelement zugeordnet. Hierdurch ist es in der neuen Anwendung möglich, eine Ausblendung direkt über das erste Einstellelement zu aktivieren oder zu deaktivieren, beziehungsweise die Auflösung des Lichtgitters über das zweite Einstellelement zu verändern. Durch die Einstellelemente können auch nur die zugeordneten Funktionen verändert werden. Eine Sabotage oder ein unabsichtliches Verändern der übrigen Funktionen ist dadurch nicht möglich.

Gemäß der Erfindung wird das Lichtgitter oder die Sicherheitssteuerung also mit einer kleinen Anzahl Einstellelemente ausgestattet. Dadurch lassen sich eine begrenzte Anzahl von Funktionen ohne zusätzliche Hilfsmittel übersichtlich und direkt einstellen. Eine Belegung der Einstellelemente wird jedoch nicht unveränderbar festgelegt, sondern ist mittels einer Konfigurationssoftware bei der Herstellung veränderbar. Damit können genau diejenigen Funktionen mittels der Einstellelemente ohne Hilfsmittel verändert werden, die für eine gewünschte Anwendung benötigt werden. Der Hersteller des erfindungsgemäßen Lichtgitters kann also eine große Variantenzahl anbieten, die erst durch den Kundenauftrag spezifiziert wird, so dass der Kunde/Anwender ein Lichtgitter erhält, mit einem übersichtlichen, begrenzten und auf seine Anwendung abgestimmten, einstellbaren Funktionsumfang. Dadurch entsteht trotz einer Vielzahl möglicher Varianten eine geringere Lagerhaltung, denn die Lichtgitter werden erst auf Kundenwunsch mit speziellen Funktionen ausgerüstet und die Funktionen des Lichtgitters können weiterhin ohne Werkzeuge vom Anwender direkt eingestellt werden. Dadurch erhält der Kunde ein individuelles Lichtgitter, das genau den Funktionsumfang aufweist, den er wünscht und er kann diese gewünschten Funktionen dennoch bequem aktivieren, deaktivieren oder auch eine Merkmalsauswahl für eine bestimmte Funktion treffen. Durch die Erfindung ist es somit möglich, dem Kunden ein "maßgeschneidertes" Lichtgitter zur Verfügung zu stellen. Der Hersteller wiederum braucht nur ein Lichtgitter zu produzieren und am Ende der Produktion die Konfiguration gemäß dem Kundenwunsch vornehmen. Dadurch wird auch die Herstellung dieser Lichtgitter mit einem vielseitigen Funktionsumfang vereinfacht.

Die Zuordnung der einzelnen Funktionen zu den Einstellelementen wird durch die Steuer- und Auswerteeinheit, beispielsweise mit einem PC und einer Schnittstelle zu dem Lichtgitter durchgeführt. Dadurch ist es übersichtlich möglich, die einzelnen Funktionen den Einstellelementen zuzuordnen. Durch den PC kann auch das Maß der erlaubten Einstellungen, die über die Einstellelemente möglich sein sollen, festgelegt werden. So ist es beispielsweise möglich, eine vorgegebene Auflösung lediglich zu aktivieren oder zu deaktivieren oder auch zwischen verschiedenen Auflösungen, beispielsweise den Auflösungen 20, 30 und 40 mm, umzuschalten. So kann die Funktion des Lichtgitters oder der Sicherheitssteuerung sehr genau an die jeweils notwendigen Veränderungen eingestellt werden. Mit Hilfe einer zugehörigen Konfiguration lässt sich eine Belegung der Einstellelemente in einem Speicher abspeichern, sichern und auch dokumentieren. Bei dem PC kann es sich um einen Industrie-PC oder einen Steuerrechner handeln. Die Schnittstelle zu dem Lichtgitter oder der Sicherheitssteuerung wird bevorzugt über bekannte Feldbusse, Feldnetze oder sichere Bussysteme beispielsweise Profibus, Interbus oder andere eingeführte Systeme gebildet. Zwischen dem PC und dem Lichtgitter können auch Schnittstellen wie Ethernet, USB, RS232, RS485 oder auch Schnittstellen und Netze zur Funkübertragung, beziehungsweise drahtlosen Übertragung wie beispielsweise die IRDA, WLAN usw. vorgesehen sein. Im Lichtgitter oder der Sicherheitssteuerung wird die Zuordnung der Funktionen in einem Speicher gespeichert, so dass die Zuordnung bis zu einer weiteren Veränderung erhalten bleibt.

Gemäß der Erfindung wird das Lichtgitter oder die Sicherheitssteuerung mit einer kleinen Anzahl, beispielsweise zwei bis vier Einstellelementen ausgestattet. Das bedeutet, dass sich zwei bis vier gesonderte Funktionen jederzeit direkt am Sensor und ohne besondere Hilfsmittel einstellen lassen. Die Belegung der Einstellelemente mit anderen neuen wählbaren Funktionen kann jedoch weiterhin mit externen Programmierwerkzeugen vorgenommen werden.

In einer bevorzugten Ausführung ist ein Anzeigeelement zur Anzeige von graphischen Symbolen oder Zeichen ausgebildet. Abhängig von der zugeordneten Funktion oder einer Betätigung des Einstellelementes werden unterschiedliche Symbole angezeigt. Durch die unterschiedlichen Symbole ist es möglich, die zugehörigen Funktionen eindeutig zu identifizieren. Zur Umschaltung einer Kodierung der Lichtstrahlen wird beispielsweise der Buchstabe 'C' oder 'K' für die Begriffe 'Code' oder 'Kodierung' vorgesehen. Analog hierzu ist beispielsweise zur Einstellung einer Reichweite der Buchstabe 'R' oder ein anderer bezeichnender Buchstabe vorgesehen. Es kann sich dabei auch um eine Ziffern- und Zahlenkombination handeln, so ist beispielsweise für eine Umschaltung einer Kodierung eine Zeichenkombination C1, C2 usw. möglich. Bei Verwendung einer grafischen Anzeige ist es vorteilhaft vorgesehen, die einstellbaren Funktionen mit bezeichnenden grafischen Symbolen zu kennzeichnen. Die gewählten Symbole lassen durch ihre Darstellung die jeweilige Funktion erkennen. Beispielsweise kann für eine Einstellung von Zeitfunktionen ein Uhrensymbol verwendet werden.

In Weiterbildung der Erfindung ist das Einstellelement als Taster, Schalter, Drehschalter oder DIP-Schalter ausgebildet und sichtbar angeordnet. Durch die Verwendung eines Tasters kann eine Funktion bequem durch einen Tastendruck aktiviert, beziehungsweise deaktiviert werden. Abhängig von der Betätigung des Tasters wird über das Anzeigeelement eine Veränderung der Einstellung angezeigt. Bei Verwendung eines Schalters kann eine Aktivierung oder Deaktivierung einer Funktion direkt an der entsprechenden Schalterstellung abgelesen werden. So entspricht beispielsweise eine erste Schalterstellung einer aktivierten Ausblendung und eine zweite Schalterstellung einer deaktivierten Ausblendung. Der Einsatz eines Drehschalters bietet sich für Einstellungen an, bei denen eine mehrfache Auswahl notwendig ist. Dies ist beispielsweise bei der Auswahl einer Auflösung für das Lichtgitter gegeben. Durch einen Drehschalter mit mehr als 2 Schaltpositionen kann beispielsweise eine Auswahl zwischen den Auflösungen 14, 20, 30 und 40 mm eingestellt werden. Die entsprechende Einstellung wird wiederum über eine optische Anzeige dargestellt. Eine Mehrfachanordnung von Schaltern kann beispielsweise auch mit einem DIP-Schalter realisiert werden. Bei einem DIP-Schalter sind mehrere Schaltelemente nebeneinander angeordnet. Die Verwendung eines DIP-Schalters ist vorgesehen, wenn auf engstem Raum, beispielsweise bei sehr kleinen Lichtgittern, mehrere Einstellelemente angeordnet werden sollen. Beispielsweise ist es möglich, vier verschiedene Funktionen mit einem vierfachen DIP-Schalter einzustellen. So ist es möglich, bei kleinen Lichtgittern die Funktionen Reichweite, Wiederanlaufsperre, Schützkontrolle und Auflösung einzustellen. Ein Anwender braucht damit kein zusätzliches, separates Programmierwerkzeug mehr und kann trotzdem eine Anzahl an anwendungsbezogenen Funktionen selbst einstellen.

In einer weiteren Ausführungsform ist das Anzeigeelement als Sieben-SegmentAnzeige, LCD-Anzeige oder OLED-Anzeige (organische LED) ausgebildet. Zur Anzeige der Funktionen bei wechselnden Umgebungslichtverhältnissen ist es vorteilhaft vorgesehen, das Anzeigeelement als LED-Segmentanzeige, beispielsweise als 7-Segmentanzeige, welche selbstleuchtend ist, auszubilden. Dadurch ist es möglich, auch bei eingeschränkten Lichtverhältnissen die Anzeige noch abzulesen. Zur Darstellung von grafischen Symbolen ist es vorteilhaft vorgesehen, das Anzeigeelement als LCD Anzeige auszubilden. Die entsprechenden Symbole können durch einzelne Bildpunkte oder Pixel dargestellt werden oder durch entsprechende vordefinierte grafische Anzeigesymbole. Bei besonders hohen Anforderungen an eine Leuchtstärke und eine Anzeigeauflösung können auch organische LED-Anzeigen eingesetzt werden.

Das Einstellelement ist bevorzugt in der ersten und/oder der zweiten Leiste integriert. Durch die Integration der Einstellelemente in der jeweiligen Leiste sind diese räumlich direkt der entsprechenden Leiste zugeordnet. Mit den Einstellelementen der ersten Leiste, die als Sendeleiste ausgebildet ist, werden spezielle Funktionen der Sendeleiste, wie beispielsweise eine einstellbare Sendeleistung oder eine Kodierung der Sendestrahlen, eingestellt. Hingegen werden mit den Einstellelementen der zweiten Leiste, die als Empfangsleiste ausgebildet ist, spezielle Funktionen des Empfängers eingestellt, wie beispielsweise eine Wiederanlaufsperre, eine Schützkontrolle oder auch eine eingestellte Kodierung zu empfangender Lichtstrahlen.

Der auf ein Verfahren gerichtete Teil der Aufgabe wird durch ein Verfahren zur Einstellung von Funktionen eines Sicherheits-Lichtgitters oder einer Sicherheitssteuerung mit einer Steuer- und Auswerteeinheit, einem Speicher und wenigstens einem Einstellelement mit folgenden Verfahrenschritten gelöst:
Zuordnen einer einstellbaren Funktion zu dem Einstellelement mittels der Steuer- und Auswerteeinheit über eine Schnittstelle des Lichtgitters oder der Sicherheitssteuerung und
   Speichern der Zuordnung, so dass die Zuordnung bis zu einer weiteren Veränderung erhalten bleibt.
Im Folgenden wird die Erfindung anhand eines Ausführungsbeispiels unter Bezugnahme auf die Zeichnung im Einzelnen erläutert. In der Zeichnung zeigen:
   - Fig. 1: eine schematische Darstellung eines erfindungsgemäßen Lichtgitters;
   - Fig. 2: eine schematische Darstellung von Einstell- und Anzeigeelementen einer Lichtsendeleiste oder Lichtempfangsleiste des Lichtgitters aus Fig. 1;
   - Fig. 3: eine schematische Darstellung einer Konfigurationsmaske.

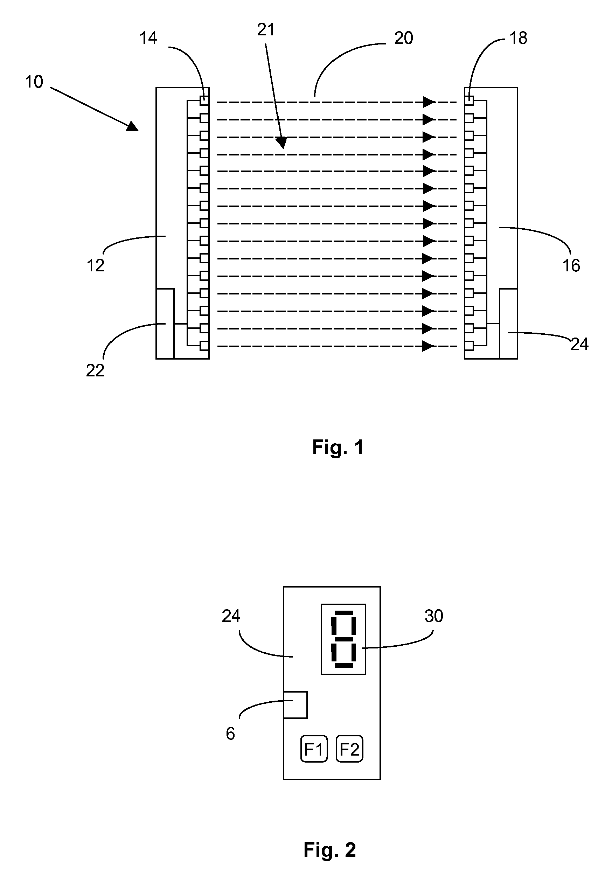

Ein erfindungsgemäßes Lichtgitter 10 mit einer erfindungsgemäßen Konfigurationsvorrichtung weist eine Lichtsendeleiste 12 auf, die eine Reihe nebeneinander angeordneter Lichtsender 14 aufweist und eine Lichtempfangsleiste 16, die den Lichtsendern 14 entsprechende, ebenfalls nebeneinander angeordnete Lichtempfänger 18 aufweist. Jeweils gegenüberliegende Lichtsender 14 und Lichtempfänger 18 bilden in bekannter Weise eine Vielzahl zueinander paralleler Lichtschranken 20, deren Lichtstrahl in Fig. 1 durch gestrichelte Linien dargestellt ist. Das Lichtgitter 10 mit seinen Lichtschranken 20 definiert somit zwischen Sendeleiste 12 und Empfangsleiste 16 einen Überwachungsbereich mit einem Schutzfeld 21. Das Lichtgitter 10 weist weiter wenigstens eine Steuer- und Auswerteeinheit auf. In dem dargestellten Ausführungsbeispiel ist sowohl in der Sende- 12 als auch in der Empfangsleiste 16 wenigstens je eine Steuer- und Auswerteeinheit 22 bzw. 24 vorgesehen. Die Steuer- und Auswerteeinheit 22 steuert die einzelnen Lichtsender 14 der Sendeleiste 12 und die Steuer- und Auswerteeinheit 24 der Empfangsleiste steuert die Lichtempfänger 18 und wertet deren Signale aus, so dass bei Unterbrechung einer oder mehrerer Lichtschranken 20 durch ein Objekt ein Warnsignal aus der Steuer- und Auswerteeinheit 24 ableitbar ist. Dieses Signal kann auch zum Abschalten einer gefährlichen Maschine dienen. Bei dem Lichtgitter kann es sich auch um ein Lichtgitter handeln, bei dem Lichtsender und Lichtempfänger jeweils in einer ersten Leiste und zugeordnete Lichtsender und Lichtempfänger in einer gegenüberliegenden Leiste angeordnet sind.

Die grundsätzliche Funktionsweise eines solchen Lichtgitters 10 ist z. B. in der DE 38 03 033 A1 beschrieben. Die einzelnen Lichtschranken 20 des Lichtgitters 10 werden zyklisch der Reihe nach aktiviert. Dabei werden die Lichtsender 14 und Lichtempfänger 18 auf optischem Wege über beispielsweise die erste und/oder letzte Lichtschranke 20 synchronisiert, so dass immer der dem momentan sendenden Lichtsender 14 gegenüberliegende Lichtempfänger 18 aktiviert ist. Insbesondere ist dadurch eine elektrische Verbindung zwischen der Sendeleiste 12 und der Empfangsleiste 16 nicht notwendig.

Das erfindungsgemäße Lichtgitter 10 ist derart ausgebildet, dass unterschiedliche Konfigurationen je nach Einsatzzweck einstellbar sind. Die entsprechende Konfiguration muss in das Lichtgitter 10 vor einem Ersteinsatz oder auch nach einem Austausch eingespeichert werden. Je nachdem, welche Funktionen an dem Lichtgitter 10 einstellbar sind, sind die jeweiligen Funktionsparameter in einem Konfigurationsmodus vor einer Inbetriebnahme eingebbar. Diese Funktionen können beispielsweise sein:
- Aktivieren oder Deaktivieren einer Schützkontrolle,
- Aktivieren oder Deaktivieren einer Wiederanlaufsperre,
- Aktivieren oder Deaktivieren einer Reichweite,
- Einstellen eines Signals an einem Diagnoseausgang,
- Einstellen einer Auswahl von Muting-Zeiten,
- Aktivieren, Deaktivieren oder Einstellen einer Ausblendung,
- Aktivieren oder Deaktivieren einer Überbrückung,
- Aktivieren oder Deaktivieren eines Taktbetriebs,
- Umschalten einer Sendeleistung zwischen verschiedenen Stufen,
- Aktivieren oder Deaktivieren einer reduzierten Auflösung,
- Aktivieren oder Deaktivieren einer Zeitbegrenzung für eine Überbrückung.

In Figur 2 sind die Einstellelemente F1 und F2 zusammen mit einer Sieben-Segmentanzeige 30 dargestellt. Die Einstellelemente F1 und F2 und das Anzeigeelement 30 sind dabei mit der Steuer- und Auswerteeinheit 24 verbunden und wie in Figur eins ersichtlich, an der Empfängerleiste angeordnet. Ausgehend von einer Anwendung soll in dem Lichtgitter die Funktion der Schützkontrolle und die Funktion der Wiederanlaufsperre über die Einstellelemente aktiviert, beziehungsweise deaktiviert werden.

Bei der aktivierten Schützkontrolle bei dem Lichtgitter wird das Auslösen eines an Schaltausgänge des Lichtgitters angeschlossenen Relais oder Schaltschützes überprüft. Hierzu werden Schaltkontakte des Relais auf Eingänge des Lichtgitters rückgeführt und der Schaltzustand des Relais oder Schützes anhand der rückgeführten Kontakte überprüft. Bei einem Deaktivieren der Schützkontrolle findet keine Überprüfung statt. Durch die Schützkontrolle kann wirksam geprüft werden, ob ein angeschlossenes Relais einwandfrei schaltet. Bei einer Fehlfunktion, beispielsweise wenn die Schaltkontakte hängen bleiben, wird von dem Lichtgitter eine Fehlermeldung ausgegeben.

Eine aktivierte Wiederanlaufsperre führt dazu, dass nach einem Eingriff in das Lichtgitter und anschließendem Freiwerden des Schutzfeldes die Schaltausgänge nicht automatisch wieder ein freies Schutzfeld anzeigen. Erst nach Betätigen einer beispielsweise an dem Lichtgitter anschließbaren Reset-Taste wird der Schaltausgang wieder freigegeben. Diese Funktion erhöht die Sicherheit beim Einsatz von Lichtgittern durch die zusätzliche Quittierung. Ein Deaktivieren der Wiederanlaufsperre führt dazu, dass die Schaltausgänge unmittelbar nach dem Freiwerden des Schutzfeldes wieder geschaltet werden.

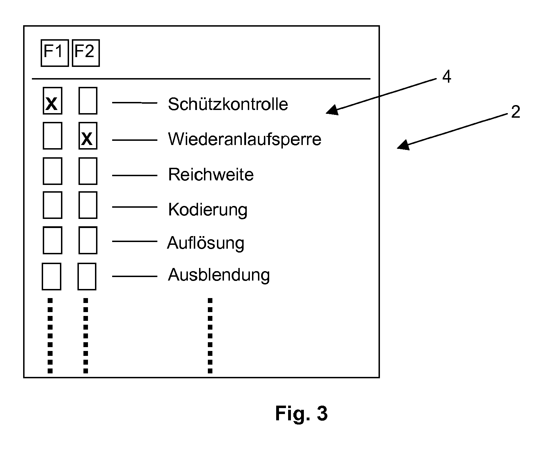

Eine Zuordnung der einstellbaren Funktionen zu den Einstellelementen erfolgt beispielsweise über einen Personalcomputer (PC). Hierzu wird zunächst über eine Konfiguration mit einem PC die Funktion der Wiederanlaufsperre dem Einstellelement F1 zugeordnet und die Funktion der Schützkontrolle dem Einstellelement F2 zugeordnet. Hierzu wird der PC über eine Schnittstelle mit dem Lichtgitter verbunden. Bei der Schnittstelle kann es sich beispielsweise um eine RS 232, eine USB Schnittstelle oder eine andere Art von Datenverbindung wie Bussysteme oder drahtlose Übertragungsschnittstellen handeln. Die Konfiguration geschieht vorzugsweise mit Hilfe einer Konfigurationsmaske 2 einer grafischen Benutzeroberfläche entsprechend Figur 3, durch einfaches Anwählen einer Funktion 4 aus einer Auswahl von Funktionen 4, so dass eine Zuordnung zu den Einstellelementen F1 und F2 vorgenommen wird. Bei der Zuordnung der Funktionen 4 kann zusätzlich auch eingestellt werden, ob diese nach dem Einschalten des Lichtgitters aktiviert oder deaktiviert sind. In diesem Fall wird die Schützkontrolle und die Wiederanlaufsperre nach dem Einschalten des Gerätes deaktiviert.

Wird nun im Betrieb oder nach dem Einschalten des Gerätes das Einstellelement F1 aus Figur 2 einmal betätigt, wird die Wiederanlaufsperre aktiviert. Ein erneutes Betätigen des Einstellelementes F1 führt zum Deaktivieren der Wiederanlaufsperre. Zur Aktivierung oder Deaktivierung kann jeweils auch ein zweifaches Betätigen des Einstellelementes vorgesehen sein. So wird bei einem ersten Betätigen auf der Anzeige ein entsprechendes Zeichen 'p' für die Wiederanlaufsperre angezeigt. Nach einem erneuten Betätigen wird das Zeichen 'α' angezeigt, um zu signalisieren, dass die Wiederanlaufsperre aktiviert worden ist. Wird das Einstellelement erneut betätigt, erscheint wiederum das Zeichen 'p' zur Einstellung der Wiederanlaufsperre. Ein weiteres Betätigen des Einstellelements führt zum Deaktivieren der Funktion Wiederanlaufsperre und einer zugehörigen Anzeige ' 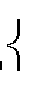 ' um das Deaktivieren anzuzeigen.

Mit dem Einstellelement F2 aus Figur 2 kann auf die gleiche Weise und unabhängig eine Schützkontrolle deaktiviert oder aktiviert werden. Mit einer ersten Tastenbetätigung des Einstellelementes F2 wird das Zeichen 'ε' zur Kennzeichnung der Einstellung Schützkontrolle angezeigt. Nach einer weiteren Betätigung erscheint das Zeichen 'α' zur Kennzeichnung einer Aktivierung der Schützkontrolle. Durch eine weitere zweifache Betätigung kann die Schützkontrolle wieder abgewählt werden.

Das Aktivieren oder Deaktivieren einer Funktion über die Einstellelemente kann nach einer besonderen Ausführungsform nur abhängig von einer weiteren Bedingung möglich sein. Diese Bedingung kann beispielsweise sein, dass das Einstellen nur in einer Phase nach dem Einschalten des Lichtgitters erfolgen kann oder nachdem beide Einstellelemente gleichzeitig für eine bestimmte Zeit betätigt worden sind. So wird wirksam einer unabsichtlichen Fehlbedienung vorgebeugt.

Gemäß einem weiteren Ausführungsbeispiel kann beispielsweise das Aktivieren oder Deaktivieren einer Wiederanlaufsperre, das Einstellen eines Signals an einem Diagnoseausgang, das Einstellen einer Auswahl von Muting-Zeiten, das Aktivieren, Deaktivieren oder Einstellen einer Ausblendung, das Aktivieren oder Deaktivieren einer Überbrückung, das Aktivieren oder Deaktivieren eines Taktbetriebs, das Aktivieren oder Deaktivieren einer Zeitbegrenzung für eine Überbrückung oder vergleichbare Funktionen in einer Sicherheitssteuerung über Mittel zur Zuordnung den Einstellelementen zugeordnet werden.

### Bezugszeichen:

- 2: Konfigurationsmaske
- 4: Funktion
- 6: Mittel zur Zuordnung
- 10: Lichtgitter
- 12: Lichtsendeleiste
- 14: Lichtsender
- 16: Lichtempfangsleiste
- 18: Lichtempfänger
- 20: Lichtschranken
- 21: Schutzfeld
- 22, 24: Steuer- und Auswerteeinheit
- 30: Anzeigelement
- F1, F2: Einstellelemente

## Patentansprüche

1. Konfigurationsvorrichtung, für Lichtgitter oder Sicherheitssteuerungen
- mit einer Steuer- und Auswerteeinheit (22, 24),
- mit wenigstens einem Einstellelement (F1, F2) zum Einstellen wenigstens einer Funktion (4),
**dadurch gekennzeichnet, dass**
- die Steuer- und Auswerteeinheit (22, 24) dazu ausgebildet ist, eine Zuordnung einer einstellbaren Funktion (4) zu dem Einstellelement (F1, F2) über eine Schnittstelle des Lichtgitters (10) oder Sicherheitssteuerung vorzunehmen, und ein Speicher vorgesehen ist, zum Speichern der Zuordnung, so dass die Zuordnung bis zu einer weiteren Veränderung erhalten bleibt.

2. Konfigurationsvorrichtung nach einem der vorhergehenden Ansprüche, **dadurch gekennzeichnet, dass** ein Anzeigeelement (30) zur Anzeige von graphischen Symbolen oder Zeichen ausgebildet ist, wobei abhängig von der zugeordneten Funktion oder einer Betätigung des Einstellelementes (F1, F2) unterschiedliche Symbole angezeigt werden.

3. Konfigurationsvorrichtung nach einem der vorhergehenden Ansprüche, **dadurch gekennzeichnet, dass** das Einstellelement (F1, F2) als Taster, Schalter, Drehschalter oder DIP-Schalter ausgebildet und sichtbar angeordnet ist.

4. Konfigurationsvorrichtung nach einem der vorhergehenden Ansprüche, **dadurch gekennzeichnet, dass** das Anzeigeelement (30) als Sieben-Segment-Anzeige, LCD-Anzeige oder OLED-Anzeige ausgebildet (30) ist.

5. Konfigurationsvorrichtung nach einem der vorhergehenden Ansprüche, **dadurch gekennzeichnet, dass** das Einstellelement (F1, F2) in einer ersten und/oder einer zweiten Leiste (12, 16) des Lichtgitters oder in der Sicherheitssteuerung integriert ist.

6. Sicherheits-Lichtgitter zur Überwachung eines Schutzfeldes mit einer
- ersten Leiste (12), die eine Reihe nebeneinander angeordneter Lichtsender und/oder Lichtempfänger (14) aufweist und
- einer zweiten Leiste (16), die den Lichtsendern und/oder Lichtempfängern (14) entsprechende ebenfalls nebeneinander angeordnete Lichtempfänger und/oder Lichtsender (18) aufweist, so dass eine Vielzahl zueinander paralleler und das Schutzfeld (21) bildender Lichtschranken (20) gebildet sind und
- mit wenigstens einer Steuer- und Auswerteeinheit (24), die die einzelnen Lichtschranken steuert und auswertet, so dass bei Unterbrechung einer oder mehrerer Lichtschranken (20) durch ein Objekt ein Warn- oder Steuersignal ableitbar ist,
**dadurch gekennzeichnet, dass**
- das Lichtgitter eine Konfigurationsvorrichtung nach einem der vorhergehenden Ansprüche aufweist.

7. Sicherheitssteuerung
- mit Eingängen zum Aufnehmen von Eingangssignalen,
- mit Ausgängen zum Erzeugen von sicheren Ausgangssignalen und
- mit wenigstens einer Steuer- und Auswerteeinheit zur Auswertung der Eingangsignale,
**dadurch gekennzeichnet, dass**
die Sicherheitssteuerung eine Konfigurationsvorrichtung nach einem der vorhergehenden Ansprüche 1 bis 6 aufweist.

8. Verfahren zur Einstellung von Funktionen eines Sicherheits-Lichtgitters oder einer Sicherheitssteuerung mit einer Steuer- und Auswerteeinheit (22, 24), einem Speicher und wenigstens einem Einstellelement (F1, F2), mit folgenden Verfahrenschritten:
- Zuordnen einer einstellbaren Funktion (4) zu dem Einstellelement (F1, F2) mittels der Steuer- und Auswerteeinheit über eine Schnittstelle des Lichtgitters (10) oder der Sicherheitssteuerung,
- Speichern der Zuordnung, so dass die Zuordnung bis zu einer weiteren Veränderung erhalten bleibt.

9. Verfahren nach Anspruch 9, **dadurch gekennzeichnet, dass** die Funktionen mit einem Anzeigeelement (30) dargestellt werden.

10. Verfahren nach Anspruch 8 oder 9, **dadurch gekennzeichnet, dass** die Zuordnung durch einen PC mit Hilfe einer Konfigurationsmaske (2) und einer grafischen Benutzeroberfläche durch einfaches Anwählen der Funktion aus einer Auswahl von Funktionen geschieht, so dass eine Zuordnung zu dem Einstellelement (F1, F2) vorgenommen wird.
